Europäisches Patentamt

**European Patent Office**

**Office européen des brevets**

(19)

(11) Numéro de publication: **0 156 122**
**B1**

# FASCICULE DE BREVET EUROPÉEN

(12)

(45) Date de publication du fascicule du brevet:
**08.06.88**

(21) Numéro de dépôt: **85100988.6**

(22) Date de dépôt: **31.01.85**

(51) Int. Cl.⁴: **F 16 K 11/20,** F 16 K 11/07,
G 05 D 23/13

(54) **Mélangeur eau froide - eau chaude à plaquettes céramiques commandé par un thermostat.**

(30) Priorité: **16.03.84 CH 1347/84**

(43) Date de publication de la demande:
**02.10.85 Bulletin 85/40**

(45) Mention de la délivrance du brevet:
**08.06.88 Bulletin 88/23**

(84) Etats contractants désignés:
**DE FR GB IT**

(56) Documents cité:
**EP-A-0 060 481**
**DE-A-2 804 755**
**FR-A-2 117 179**
**FR-A-2 240 395**
**FR-A-2 356 068**
**FR-A-2 483 036**
**GB-A-2 052 019**

(73) Titulaire: **KUGLER Fonderie et Robinetterie S.A.,**
**19, avenue de la Jonction Case postale 240, CH-**
**1211 Genève 8 (CH)**

(72) Inventeur: **Rodriguez, Jean- Jacques, Rue du**
**Centre, F-74400 Douvaine (FR)**

(74) Mandataire: **Micheli, Michel- Pierre, MICHELI &**
**CIE 118, Rue du Rhône Case Postale 47, CH- 1211**
**Genève 6 (CH)**

## Description

La présente invention a pour objet un mélangeur eau froide - eau chaude à plaquettes céramiques commandé par un thermostat du type comprenant un corps tubulaire présentant un organe de commande manuel du débit d'eau et un organe de réglage manuel de la température désirée du mélange d'eau.

Un tel mélangeur est par exemple connu de la demande de brevet allemand publiée DE-A-2 928 330. Ce mélangeur présente l'inconvénient de nécessiter trois plaquettes pour le réglage du débit et la fermeture des eaux.

Un mélangeur de ce type est également connu de la demande de brevet français publiée FR-A-2 483 036. Ce mélangeur comporte bien un organe de réglage du débit d'eau mélangée mais fait intervenir deux paires de plaquettes céramiques, l'une commandant l'accès d'eau froide et l'autre le débit de l'eau mélangée. Le même organe manuel de commande du débit doit commander deux paires de plaquettes, ce qui conduit à une réalisation compliquée et coûteuse.

On connaît également du document allemand DE-A-2 804 755 un mélangeur du type précité dont les deux débits d'eau entrants sont commandés par une seule paire de plaquettes.

La présente invention a pour objet un mélangeur eau froide - eau chaude du type précité tendant à obvier aux inconvénients des mélangeurs connus. Elle a notamment pour but la réalisation d'un mélangeur utilisant une seule paire de plaquettes céramiques commandée en rotation par un organe de commande manuel permettant d'assurer simultanément la commande du débit de l'eau mélangée et d'interdire une circulation interne entre l'eau chaude et froide en position fermée du mélangeur. Ce mélangeur se distingue par les caractéristiques énumérées à la revendication 1.

Le dessin annexé illustre schématiquement et à titre d'exemple deux formes d'exécution du mélangeur selon l'invention.

La figure 1 est une coupe axiale d'une première forme d'exécution du mélangeur.

La figure 2 est une coupe suivant la ligne II-II de la figure 1.

La figure 3 est une coupe suivant la ligne III-III de la figure 1.

La figure 4 est une coupe suivant la ligne IV-IV de la figure 1.

La figure 5 est une coupe axiale, suivant la ligne V-V de la figure 6 d'une seconde forme d'exécution du mélangeur.

La figure 6 est une coupe transversale du mélangeur, suivant la ligne VI-VI de la figure 5.

Les figures 7 et 8 illustrent en plan les plaquettes céramiques fixe et mobile du mélangeur de la figure 5.

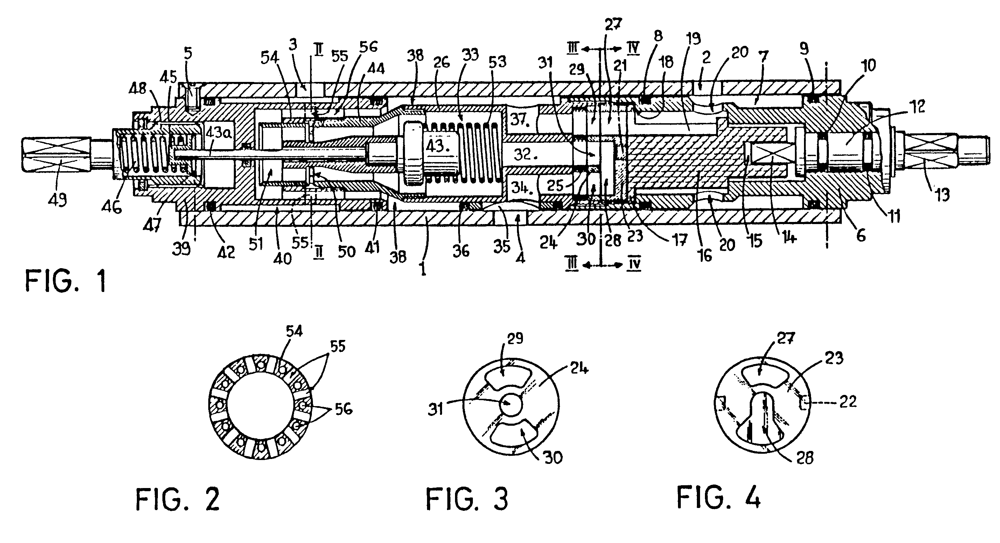

La première forme d'exécution du mélangeur illustré aux figures 1 à 4 comporte un corps tubulaire présentant à l'une de ses extrémités un organe de commande manuel du débit d'eau et à son autre extrémité un organe de réglage manuel de la température désirée du mélange d'eau.

Le corps tubulaire 1 comporte un orifice d'entrée d'eau froide 2, un orifice d'entrée d'eau chaude 3 et un orifice de sortie d' eau mélangée 4.

A l'intérieur de ce corps tubulaire 1 est monté un mécanisme fixé à ce corps 1 par des vis 5, comportant un dispositif de commande du débit de l'eau et un dispositif de réglage de la température de l'eau mélangée.

Le dispositif de commande du débit de l'eau, situé dans la partie droite du corps tubulaire 1, comporte un corps 6 de forme générale cylindrique dont la surface périphérique présente un diamètre correspondant au diamètre interne du corps tubulaire 1. Une gorge 7 détermine une chambre annulaire, rendue étanche par des joints toriques 8, 9, qui communiquent avec l'orifice d'arrivée d'eau froide 2. L'extrémité de ce corps 6 émer geant hors du corps tubulaire 1 est traversée axialement, de façon étanche grace aux joints 10, 11, par un axe de commande 12 dont l'extrémité extérieure présente un carré 13 destiné à recevoir un organe de manoeuvre non illustré. L'extrémité interne de cet axe de commande 12 présente un carré d'entraînement 14 en prise avec une formation femelle correspondante 15 d'un organe d'entraînement 16 rotatif présentant à son autre extrémité une partie en forme de disque 17 butant sur un épaulement 18 du corps et dont le diamètre extérieur correspond au diamètre intérieur d'un logement. La partie centrale de cet organe d'entraînement 16 présente un diamètre extérieur inférieur au diamètre interne du corps ainsi qu'une fraisure 19. Le corps 6 présente des perçages 20 reliant la gorge 7 à ladite fraisure 19.

La face frontale en forme de disque de la pièce d'entraînement 16 comporte deux saillies 21 se logeant dans deux creusures correspondantes 22 pratiquées dans une plaquette céramique mobile 23. Une plaquette céramique fixe 24 est appliquée contre la plaquette mobile 23 par un joint 25 et une pièce de liaison 26 vissée dans l'extrémité du corps 6.

La plaquette céramique mobile 23 est donc solidaire angulairement de la pièce d'entraînement 16 et comporte une première ouverture en forme de secteur de couronne 27 disposée en regard de la fraisure 19 et ainsi en liaison avec l'arrivée d'eau froide par les perçages 20, et la gorge 7. Cette plaquette mobile comporte une creusure 28 comportant une partie périphérique évasée et une partie centrale entourant le centre de cette plaquette.

La plaquette fixe 24 comporte deux ouvertures en forme de secteurs de couronne 29, 30 diamétralement opposées et une ouverture circulaire centrale 31.

La pièce de liaison 26 comporte un canal central 32 communiquant avec l'ouverture centrale 31 de la plaquette fixe et débouchant dans une chambre 33. Cette pièce de liaison 26 comporte encore un canal 34 en liaison avec l'ouverture 30 de la plaquette fixe 24 et débouchant dans une chambre 35 du corps tubulaire 1 communiquant avec l'orifice de sortie de l'eau mélangée 4. Cette chambre 35 est étanchée par un joint torique 36 pincé entre le corps tubulaire 1 et la pièce de liaison 26. Cette pièce de liaison comporte enfin un canal 37 en liaison avec l'ouverture 29 de la plaquette fixe 24 et débouchant dans une chambre 38 située entre cette pièce de liaison 26 et le corps tubulaire 1.

Le dispositif de réglage de la température désirée du mélange d'eau, situé dans la partie gauche du corps tubulaire 1, comporte un corps 39 cylindrique présentant une gorge annulaire définissant une chambre 40 en liaison avec l'orifice d'entrée d'eau chaude 3 et étanchée à l'aide de joints toriques 41, 42. Ce dispositif comporte encore un bulbe thermostatique 43 entouré d'une douille 44 dont la partie frontale est vissée sur la pièce de liaison 26, le bulbe étant ainsi partiellement logé dans la chambre 33. Ce bulbe est solidaire d'une tige axiale 43a, traversant de façon étanche le fond du corps 39, coopérant avec un poussoir 45 maintenu par une action élastique 46 contre une butée 47 solidaire d'un organe de réglage 48, vissé dans le corps 39, comportant un carré 49 destiné à recevoir un organe de manoeuvre (non illustré) permettant le réglage de la température du mélange d'eau.

La douille 44, vissée sur l'élément de liaison 26 présente une arête libre 50 constituant un siège d'un dispositif de réglage du débit d'eau chaude dont la partie mobile 51 est reliée au bulbe thermostatique 43. Cette partie mobile 51 se présente sous la forme d'un cylindre relié par des bras radiaux à une pièce centrale solidaire du bulbe 43. Ce cylindre coulisse sans jeu dans une partie 54 du corps 39 dans laquelle est vissée l'extrémité arrière de la douille 44, comportant des perçages radiaux 55 et des perçages axiaux 56.

Le bulbe thermostatique 43 et l'obturateur mobile 51 sont soumis à une action élastique 53 tendant à maintenir la tige 43a en contact avec le poussoir 45.

Dans le mélangeur décrit, l'eau froide entre par l'orifice 2 dans la chambre 7, passe par les passages et la fraisure 19 puis, dans la position illustrée aux dessins, traverse les plaquettes 23, 24 par leurs ouvertures 27, 29 qui sont en regard l'une de l'autre, entre dans le canal 37, arrive dans la chambre 38, traverse la partie 54 du corps 39 par les passages axiaux 56, contourne l'élément mobile 51 et se mélange à l'intérieur de la douille 44 à l'eau chaude provenant de l'ouverture 3, de la chambre 40 et traversant les passages radiaux 55 de la partie 54 du corps 39.

Il faut remarquer que la quantité d'eau chaude arrivant dans la douille 44 est déterminée par la position de la pièce mobile 51 qui modifie la section de passage des perçages de la partie 54, modifiant ainsi la proportion d'eau chaude et donc la température du mélange. Cette température de consigne du mélange est réglée par la position de l'organe de réglage 48, 49 déterminée par l'usager.

L'eau mélangée passe autour du bulbe thermostatique 43 qui détecte toutes variations de température et provoque un déplacement de l'obturateur mobile 51 afin de maintenir la température du mélange à une valeur de consigne. L'eau mélangée passe ensuite par le canal central 32, traverse l'ouverture centrale 31 de la plaquette fixe, passe par la creusure 28 de la plaquette mobile et retourne par l'ouverture 30 de la plaquette fixe dans le canal 34 d'où elle est délivrée à la chambre 35 et finalement à l'ouverture de sortie 4.

Pour régler le débit, il suffit de tourner l'organe de commande 12, 13 modifiant la position angulaire des plaquettes céramiques 23, 24 d'une position à plein débit illustrée, pour laquelle les ouvertures 27 et 29 sont totalement alignées jusque dans une position de fermeture pour laquelle les ouvertures 29 et 30 de la plaquette fixe 24 sont en regard de parties planes de la plaquette mobile 23 obturant ainsi d'une part l'arrivée d'eau froide, et empêchant toute circulation interne entre les eaux froide et chaude, et d'autre part le mélange d'eau juste avant sa sortie du mélangeur.

Le mélangeur décrit présente de nombreux avantages dont les principaux sont les suivants :

a. Une seule paire de plaquettes céramiques 23, 24 permet de régler le débit d'eau froide simultanément au débit d'eau mélangée et, en position de fermeture d'empêcher toute circulation interne entre l'eau chaude et l'eau froide.

b. Ces plaquettes se déplacent uniquement en rotation l'une par rapport à l'autre.

c. Ces plaquettes provoquent le réglage et l'obturation simultanément du mélange d'eau et de l'arrivée d'eau chaude ou froide.

d. Le flux d'eau mélangée traverse la plaquette fixe par deux fois, au travers d'ouvertures différentes, et suivant deux directions opposées.

e. La plaquette mobile 23 est traversée par le flux entrant d'une des eaux et provoque une déflexion à 180° du flux d'eau mélangée.

f. L'entraînement en rotation de la plaquette mobile s'effectue par un axe.

g. Les commandes de température et de débit sont situées chacune à une extrémité du mélangeur.

h. Les plaquettes sont disposées en aval du flux d'eau mélangée par rapport au bulbe thermostatique.

Dans une variante, il est évident que les orifices d'entrée d'eau froide 2 et chaude 3 peuvent être inversés, le flux d'eau chaude étant réglé par les plaquettes céramiques 23, 24.

Dans une variante, la plaquette mobile 23 pourrait comporter une ouverture à la place de la creusure 28, cette ouverture étant toutefois obturée par la face frontale du disque 17 de la pièce 16. Un joint peut être prévu entre cette pièce 16 et la plaquette autour de cette ouverture.

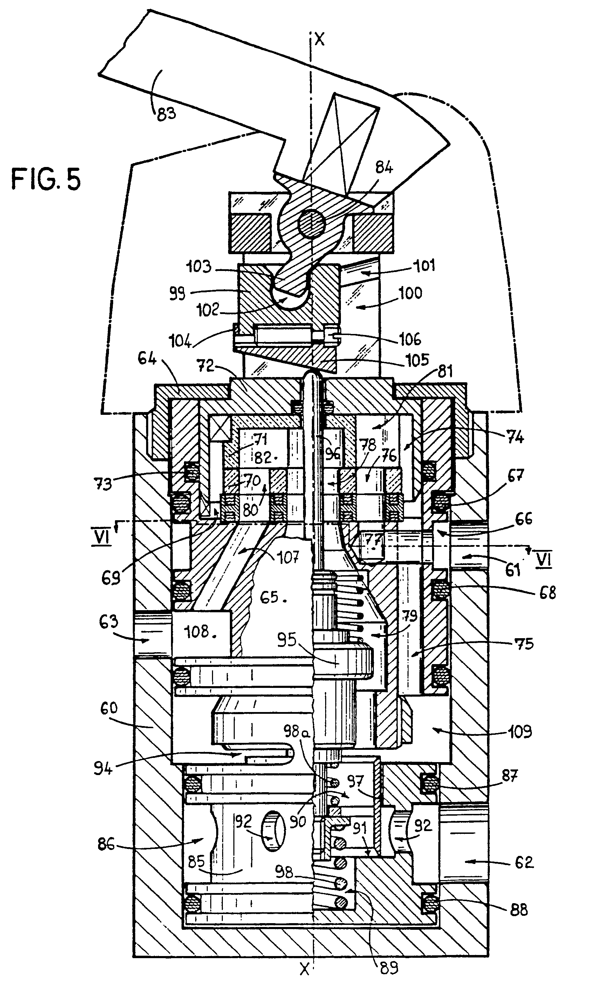

La seconde forme d'exécution du mélangeur illustrée aux figures 5 à 8 comporte un corps tubulaire fermé à l'une de ses extrémités et présentant à son autre extrémité un organe de commande manuel permettant de régler simultanément le débit d'eau et la température désirée du mélange d'eau.

Le corps tubulaire 60 comporte comme dans la première forme d'exécution un orifice d'entrée d'eau froide 61, un orifice d'entrée d'eau chaude 62 et un orifice de sortie 63 du mélange d'eau.

A l'intérieur de ce corps tubulaire 60 est monté un mécanisme fixé à ce corps 60 par une bague filetée 64, comportant un dispositif de commande du débit de l'eau et un dispositif de réglage de la température du mélange d'eau. Comme on, le verra plus loin ces deux dispositifs sont actionnés à l'aide d'un seul organe de manoeuvre manuel, le mélangeur est donc du type à monocommande.

Le dispositif de commande du débit de l'eau, situé dans la partie supérieure ouverte du corps 60, comporte un corps 65 de forme générale cylindrique dont la surface périphérique présente un diamètre correspondant au diamètre interne du corps tubulaire 60. Une gorge 66 détermine une chambre annulaire, rendue étanche par des joints toriques 67, 68 qui communique avec l'orifice d'arrivée d'eau froide 61.

L'extrémité supérieure, située du côté ouvert du corps 60, du corps 65 présente un évidement cylindrique 69 à l'intérieur duquel est logée une plaquette céramique 70, fixe et une plaquette céramique 71 mobile en rotation ainsi que l'organe d'entraînement en rotation 72 de cette plaquette mobile 71. Un joint torique 73 assure l'étanchéité entre l'organe d'entraînement 72 et le corps 65.

Les plaquettes céramiques 70, 71 concentriques au logement 69, présentent un diamètre inférieur au diamètre intérieur de l'organe d'entraînement 72 ménageant ainsi une chambre 74. Cette chambre 74 communique avec des perçages 75 traversant longitudinalement le corps 65.

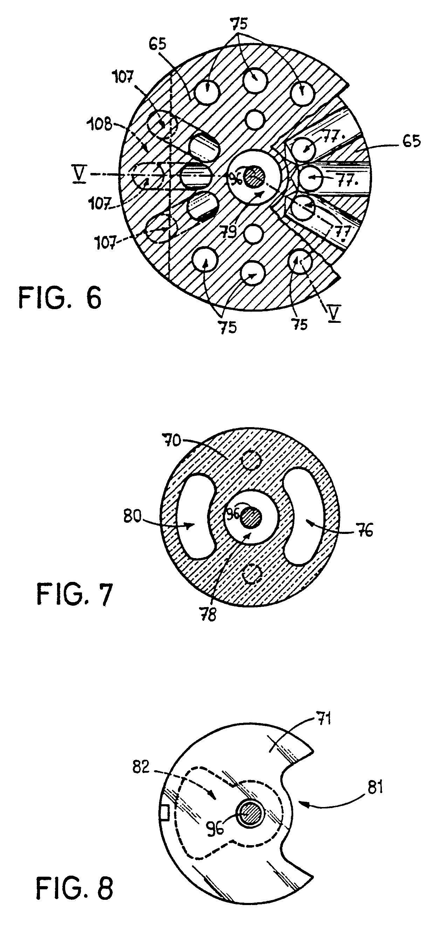

La plaquette 70 (figure 7) comporte une première ouverture 76 communiquant avec l'orifice d'entrée d'eau froide 61 par l'intermédiaire de trois conduits coudés 77 débouchant dans la gorge 66.

Cette plaquette 70 présente une seconde ouverture centrale 78 en communication permanente avec une chambre centrale 79 pratiquée dans le corps 65 et recevant, comme on le verra plus loin le bulbe thermostatique du dispositif de réglage de température.

Enfin, cette plaquette 70 comporte encore une troisième ouverture 80, présentant comme l'ouverture 76 la forme d'une fente en arc de cercle, reliée par des canaux 107 débouchant dans un évidement 108 à l'orifice de sortie 63 du mélange d'eau. Cette plaquette 70 est fixée angulairement et axialement par rapport au corps 65.

La plaquette mobile 71 (figure 8) comporte un évidement périphérique traversant 81 qui, en position d'ouverture maximale du débit est superposée à l'ouverture 76 de la plaquette fixe 70. Une creusure 82 permet de relier, en position d'ouverture totale ou partielle l'ouverture centrale 78 à la troisième ouverture 80 de la plaquette fixe. Suivant la position angulaire relative des plaquettes 70 et 71 les sorties de passage entre les ouvertures 76,78 et 80, 82 varient.

La partie de l'organe de manoeuvre 72 émergeant hors du corps 65 comporte une fraisure dans laquelle un levier de commande 83 est pivoté autour d'un axe 84. Un déplacement angulaire du levier de commande autour de l'axe longitudinal X-X du mélangeur provoque une rotation relative des plaquettes 70,71 et une modification du débit d'eau.

La partie inférieure ou fond du corps cylindrique est occupée par le dispositif de réglage de la température du mélange d'eau comprenant un corps 85 dont le diamètre correspond au diamètre interne du corps 65 et comportant une gorge annulaire 86 en liaison avec l'orifice 62 d'arrivée de l'eau chaude. Des joints 87, 88 assurent l'étanchéité de l'entrée d'eau chaude. Ce corps 85 comporte un évidement central présentant des parties 89, 90 de diamètres différents de manière à créer un épaulement 91. La partie de cet évidement de plus grand diamètre est reliée à la gorge 86 par des perçages radiaux 92.

La partie frontale du corps 85 est vissée sur la partie arrière du corps 65 de sorte que tout le mécanisme situé dans le corps 60 est monolithique. Une chambre annulaire 93 est ménagée entre les deux corps 65 et 85. Cette chambre communique d'une part avec les perçages 75 et d'autre part, par l'intermédiaire de lumières 94 pratiquées dans le corps 85, avec l'évidement central 79 du corps 65.

Le bulbe thermostatique 95 est logé dans l'évidement central 79 du corps 65 et son extrémité supérieure est munie d'une tige de commande 96 traversant les plaquettes 70, 71 et l'organe d'entraînement 72 de façon étanche. L'autre extrémité du bulbe 95 porte un distributeur annulaire 97. Lorsque le distributeur 97 arrive en appui contre la face 91, il faut prévoir une course de sécurité supplémentaire afin d'éviter toute détérioration du bulbe.

Cette course est alors obtenue par compression du ressort de surcourse 98a de très faible force et peu encombrant, ce qui modifie peu la force du ressort de rappel 98.

L'eau chaude pénètre dans la chambre 109 par la section réglée par le bulbe thermostatique 95 situé entre l'épaulement 91 et l'arête postérieure du distributeur annulaire 97, et se mélange à l'eau froide. Le mélange d'eau traverse le corps 65 par son évidement central 79, traverse l'ouverture centrale 78 de la plaquette fixe 70 et est renvoyée par la creusure 82 de la plaquette mobile 71 dans les canaux 107, la creusure 108 et l'orifice de sortie 63 de l'eau mélangée.

Comme dans la première forme d'exécution une seule paire de plaquettes céramiques permet de régler le débit d'une eau d'entrée, ici l'eau froide, et de l'eau mélangée.

Dans cette forme d'exécution à monocommande, le levier de manoeuvre commande comme on l'a vu plus haut la position angulaire relative des plaquettes 70, 71 par une rotation autour de l'axe X-X pour régler le débit d'eau. Un basculement de ce levier 83 autour de son axe d'articulation 84 agit par un mécanisme décrit ci-dessous sur l'extrémité de la tige 96 dont la position détermine par l'intermédiaire du bulbe thermostatique 95 la température désirée du mélange d'eau.

Ce mécanisme comporte une coulisse 99 déplaçable dans la fraisure 100 de l'organe d'entraînement 72 guidée par des nervures engagées dans des rainures obliques 101. Cette coulisse 99 comporte un logement 102 dans lequel est engagé un téton 103 sphérique du levier de commande 83.

La face inférieure de cette coulisse 99 présente une rainure en forme de queue d'aronde dans laquelle est engagée une nervure 104 de forme correspondante d'un coin 5 dont la face inférieure entrant en contact avec la tige de commande 96 est inclinée dans le sens opposé des rainures obliques 101. De cette façon l'amplitude du déplacement selon l'axe X-X de la tige 96 est doublée pour un déplacement latéral donné de la coulisse 99.

Pour permettre un étalonnage du bulbe thermostatique 99 la position du coin 105 sur la coulisse est réglable à l'aide d'une vis 106 prisonnière de ladite coulisse.

Dans une variante, il est évident que l'on pourrait prévoir un mécanisme de commande à un seul levier dont les déplacements angulaires autour de l'axe X-X du mélangeur contrôleraient la température du mélange tandis que les basculements de ce levier autour de l'axe 84 commanderaient le débit d'eau délivré.

Cette seconde forme d'exécution du mélangeur présente les mêmes avantages a à e et h que la première forme d'exécution. De plus, le mécanisme de réglage du débit, et notamment les plaquettes 70, 71 est facilement accessible et peut être remplacé sans démontrer le corps de l'installation dans laquelle le mélangeur est monté.

Dans cette exécution il faut encore noter le mécanisme de commande à un seul levier qui est d'une réalisation particulièrement simple et permet un étalonnage facile de la température du mélange d'eau.

De même il est particulièrement intéressant de remarquer que lors d'une surcourse de la tige de commande 96 du bulbe thermostatique 95 la pression interne maximum dans le bulbe est limitée par la force du ressort de surcourse 98 mais la force d'appui du distributeur 97 sur l'épaulement 91 reste faible, déterminée par la forme du ressort d'appui 98a. Cette force d'appui est totalement indépendante du ressort de surcourse 98.

## Revendications

1. Mélangeur à plaquettes céramiques comportant à l'intérieur d'un corps (1), présentant des orifices d'entrée d'eau (2, 3) froide et chaude et un orifice de sortie (4) d'eau mélangée, un dispositif de réglage de débit d'au moins une des eaux d'arrivée et du mélange d'eau (12 à 16, 23, 24), et un dispositif de réglage de température (43 à 51), caractérisé par le fait que le dispositif de réglage de débit (12 à 16, 23, 24) comprend comme obturateur une seule paire de plaquettes céramiques (23, 24) déplaçables en rotation l'une par rapport à l'autre commandant simultanément les débits d'une eau d'arrivée et celui du mélange d'eau de sortie; par le fait que l'une (24) des plaquettes céramiques est fixe et qu'elle comporte une ouverture centrale (31) et deux ouvertures latérales (29, 30) disposées symétriquement de part et d'autre de l'ouverture centrale (31); par le fait que la plaquette céramique mobile (23) comporte d'une part une ouverture latérale (27) coopérant avec l'une (29) des ouvertures (29, 30) de la plaquette fixe, et d'autre part une creusure (28) coopérant avec les deux autres ouvertures (30, 31) de la plaquette fixe (24); et par le fait que le flux d'une des eaux d'entrée, froide ou chaude, traverse de part en part les deux plaquettes céramiques (23, 24), tandis que le flux d'eau mélangée traverse une seule (24) des plaquettes, une fois dans un sens et une fois dans l'autre sens, ce flux étant déflecté par l'autre plaquette (23).

2. Mélangeur selon la revendication 1, caractérisé par le fait que le flux d'eau mélangée traverse l'ouverture centrale (31) de la plaquette fixe (24), est déflectée de 180° dans la creusure (28) de la plaquette mobile (23) et retraverse la plaquette fixe (24) dans l'autre sens par l'une (30) de ses ouvertures latérales.

3. Mélangeur selon l'une des revendications précédentes, caractérisé par le fait que le corps est tubulaire (1) et que le mécanisme, comprenant le dispositif de réglage de débit (12 à 18, 23, 24) et le dispositif de réglage de température (43 à 51) est monté de façon amovible dans ce corps (1).

4. Mélangeur selon la revendications 1, caractérisé par le fait que la plaquette céramique mobile (23) comporte d'une part une ouverture latérale (27) coopérant avec l'une (24) des ouvertures de la plaquette fixe, et d'autre part une seconde ouverture coopérant avec les deux autres ouvertures (30, 31) de la plaquette fixe (24), cette dernière ouverture étant obturée du côté opposé à la plaquette fixe (24).

5. Mélangeur selon l'une des revendications 1 à 4, caractérisé par le fait que les organes de manoeuvre (13, 49) du dispositif de réglage de débit et de réglage de température sont situés chacun à une extrémité du corps tubulaire (1).

6. Mélangeur selon l'une des revendications 1 à 4, caractérisé par le fait qu'il comporte une monocommande dont l'organe de manoeuvre (83) déplaçable en rotation et en basculement commande les dispositifs de réglage de débit (65, 70, 71) et de réglage de température (45 à 98), cette monocommande étant située à l'une des extrémités du corps tubulaire (60).

7. Mélangeur selon la revendication 6, caractérisé par le fait que la tige de commande (96) du bulbe thermostatique (95) du dispositif de réglage de la température de l'eau mélangée traverse de part en part les deux plaquettes (70, 71) céramiques du dispositif de réglage du débit de l'eau.

8. Mélangeur selon la revendication 7, caractérisé par le fait qu'un distributeur annulaire (97), dont une arête coopère avec un épaulement (91) du corps tubulaire (85) pour définir la section du passage d'une eau d'entrée, est relié au bulbe thermostatique (95) par l'intermédiaire d'un ressort d'appui (98) qui seul détermine la pression de cette arête contre ledit épaulement (9I) en cas de surcourse de la commande du bulbe thermostatique (95).

9. Mélangeur selon la revendication. 6, caractérisé par le fait que la plaquette mobile (71) est entraînée en rotation par un organe d'entraînement (72) dont la partie émergeant hors du corps tubulaire (60) présente une fente (100) dans laquelle une coulisse (99) se déplace dans des glissières obliques.

10. Mélangeur selon la revendication 9, caractérisé par le fait que la coulisse (19) comporte un évidement (102) dans lequel est engagé un téton (103) du levier de commande (83), articulé sur l'organe d'entraînement (72) autour d'un axe (74) perpendiculaire à l'axe longitudinal du mélangeur, la face d'appui opposée de la coulisse (99) comportant un coin (105) dont la face active, en contact avec la tige de commande (96) du bulbe thermostatique (95) est inclinée en sens opposé à la glissière de la coulisse (99).

11. Mélangeur selon la revendication 10, caractérisé par le fait que la position du coin (105) par rapport à la coulisse (99) est réglable à l'aide d'une vis (106).

**Patentansprüche**

1. Mischventil mit Keramikscheiben mit einem Gehäuse (1) mit Einlaßöffnungen (2, 3) für kaltes und warmes Wasser und einer Auslaßöffnung (4) für temperiertes Wasser und einer eingebauten Durchsatzregelvorrichtung für mindestens eine der Speisewasserarten und das Zapfwasser (12 bis 16, 23, 24) sowie einer eingebauten Temperaturregelvorrichtung (43 bis 51), dadurch gekennzeichnet, daß der Ventilkörper der Durchsatzregelvorrichtung (12 bis 16, 23, 24) aus nur einem Paar gegeneinander drehbar gelagerter Keramikscheiben (23, 24) besteht, durch die gleichzeitig der Durchsatz der einen Speisewasserart und des Zapfwassers geregelt wird, daß eine der Keramikscheiben (24) fest angeordnet ist und eine zentrale Öffnung (31), sowie zwei symmetrisch auf beiden Seiten der zentralen Öffnung (31) angeordnete Öffnungen (29, 30) aufweist, daß die bewegliche Keramikscheibe (23) einerseits eine seitliche Öffnung (27) aufweist, die mit einer (29) der Öffnungen (29, 30) der festen Keramikscheibe zusammenwirkt, und andererseits eine mit den beiden anderen Öffnungen (30, 31) der festen Scheibe (24) zusammenwirkende Aussparung (28), und dadurch, daß die beiden Keramikscheiben (23, 24) durch eine kalte oder warme Speisewasserart durchströmt werden, während nur durch eine (24) der Scheiben das Zapfwasser in beiden Richtungen fließt, wobei dieser Fluß durch die andere Scheibe (23) umgelenkt wird.

2. Mischventil nach Anspruch 1, dadurch gekennzeichnet, daß das Zapfwasser durch die zentrale Öffnung (31) der festen Scheibe (24) strömt, in der Aussparung (28) der beweglichen Scheibe (23) um 180° umgelenkt wird und durch eine (30) der beiden seitlichen Öffnungen hindurch die feste Scheibe (24) in anderer Richtung erneut durchströmt.

3. Mischventil nach einem der vorstehenden Ansprüche, dadurch gekennzeichnet, daß das Gehäuse (1) rohrförmig ist, und daß der aus der Durchsatzregel- (12 bis 18, 23, 24) und Temperaturregelvorrichtung (43 bis 51) bestehende Einsatz im Gehäuse (1) herausnehmbar eingebaut ist.

4. Mischventil nach Anspruch 1, dadurch gekennzeichnet, daß die bewegliche Keramikscheibe (23) einerseits mit einer seitlichen Öffnung (27) versehen ist, die mit einer (24) der Öffnungen der festen Scheibe zusammenwirkt, und andererseits eine zweite Öffnung aufweist, die mit den beiden anderen Öffnungen (30, 31) der festen Scheibe (24) zusammenwirkt, wobei diese Öffnung auf der der festen Scheibe (24) gegenüberliegenden Seite verschlossen ist.

5. Mischventil nach einem der Ansprüche 1 bis 4, dadurch gekennzeichnet, daß die Betätigungsorgane (13, 49) der Durchsatz- und der Temperaturregelvorrichtung jeweils an einem Ende des rohrförmigen Gehäuses (1) angeordnet sind.

6. Mischventil nach einem der Ansprüche 1 bis 4, dadurch gekennzeichnet, daß es mit einem einzigen, dreh- und schwenkbar gelagerten Betätigungsorgan (83) versehen ist, das auf die Durchsatz- (65, 70, 71) und die Temperaturregelvorrichtung (45 bis 98) wirkt und an einem Ende des rohrförmigen Gehäuses (60) angeordnet ist.

7. Mischventil nach Anspruch 6,

dadurch gekennzeichnet, daß der Schaft (96) des Thermostatgliedes (95) des Zapfwassertemperaturreglers die beiden Keramikplatten (70, 71) der Durchsatzregelvorrichtung durchsetzt.

8. Mischventil nach Anspruch 7, dadurch gekennzeichnet, daß ein Verteilerring (97), dessen eine Kante mit einer Schulter (91) des Ventilgehäuses (85) zusammenwirkt, um den Durchströmquerschnitt für eine der Speisewasserarten festzulegen, mit dem Thermostatglied (95) über eine Stützfeder (98) verbunden ist, durch die der Anpreßdruck dieser Kante auf die genannte Schulter (91) im Falle einer Übersteuerung des Thermostatgliedes (95) bestimmt wird.

9. Mischventil nach Anspruch 6, dadurch gekennzeichnet, daß die bewegliche Scheibe (71) durch einen Mitnehmer (72) in Drehbewegung versetzt wird, von dem das aus dem Ventilgehäuse (60) austretende Teil mit einem Spalt (100) versehen ist, in dem ein Gleitstück (99) sich in geneigten Führungen bewegt.

10. Mischventil nach Anspruch 9, dadurch gekennzeichnet, daß das Gleitstück (99) mit einer Aussparung (102) versehen ist, in die ein Zapfen (103) des am Mitnehmer (72) um eine zur Längsachse des Mischventiles senkrechten Achse (74) angelenkten Stellhebels (83) eingreift, wobei die entgegengesetzte Fläche des Gleitstücks (99) mit einem Keil (105) versehen ist, dessen Steuerfläche für den Schaft (96) des Thermostatgliedes (95) in entgegengesetzter Richtung zur Führung des Gleitstückes (99) geneigt ist.

11. Mischventil nach Anspruch 10, dadurch gekennzeichnet, daß die Stellung des Keiles (105) gegenüber dem Gleitstück (99) durch eine Schraube (106) verstellbar ist.

**Claims**

1. Mixer tap with ceramic plates comprising within a body (1) presenting cold and hot water inlet openings (2, 3) and a outlet opening (4) for the mixed water, a device for regulating the flow rate of at least one of the inlet water and of the mixture of water (12 to 16, 23, 24), as well as a regulating device of the temperature (43 to 51), characterized by the fact that the device for regulating the flow rate (12 to 16, 23, 24) comprises as obturator only one pair of ceramic plates (23, 24) displaceable in rotation the one with respect to the other, controlling simultaneously the flow rates of one inlet water and the one of the outgoing mixture of water ; by the fact that one (24) of the ceramic plates is fixed and that it comprises a central aperture (31) and two lateral apertures (29, 30) disposed symmetrically on either side of the central aperture (31) ; by the fact that the movable ceramic plate (23) comprises on the one hand a lateral opening (27) cooperating with one (29) of the apertures (29, 30) of the fixed plate and on the other hand a recess (28) cooperating with the two other apertures (30, 31) of the fixed plate (24); and by the fact that the flow of one of the inlet waters, cold or hot, passes through the two ceramic plates (23, 24), whereas the flow of mixed water crosses only one (24) of the plates, once in one direction and a second time in the other direction, this flow being deflected by the other plate (23).

2. Mixer tap according to claim 1, characterized by the fact that the flow of mixed water goes through the central aperture (31) of the fixed plate (24), is deflected of 180° in the recess (28) of the movable plate (23) and traverses again the fixed plate (24) in the other direction through one (30) of its lateral openings.

3. Mixer tap according to one of the preceding claims, characterized by the fact that the body is tubular (1) and that the mechanism comprising the device for regulating the flow rate (12 to 18, 23, 24) and the device for regulating the temperature (43 to 51) is mounted in a removable manner in this body (1).

4. Mixer tap according to claim 1, characterized by the fact that the movable ceramic plate (23) comprises on the one hand a lateral aperture (27) cooperating with one (24) of the apertures of the fixed plate and on the other hand a second opening cooperating with the two other openings (30, 31) of the fixed plate (24), this latter opening being obturated on the opposite side of the fixed plate (24).

5. Mixer tap according to one of claims 1 to 4, characterized by the fact that the actuating members (13, 49) of the regulating device for the flow rate and for the regulating the temperature are located each at one end of the tubular body (1).

6. Mixer tap according to one of claims 1 to 4, characterized by the fact that it comprises a monocontrol , the actuating member (83) of which is displaceable in rotation and tiltable controls the regulating device of the flow rate (65, 70, 71) and of the temperature regulation (45 to 98), this monocontrol being located at one end of the tubular body (60).

7. Mixer tap according to claim 6, characterized by the fact the control rod (96) of the thermostatic bulb (95) of the device for regulating the temperature of the mixed water traverses through out the two ceramic plates (70, 71) of the regulating device for the flow rate of the water.

8. Mixer tap according to claim 7, characterized by the fact that an annular distributor (97) an edge of which cooperates with a shoulder (91) of the tubular body (85) for defining the passage cross section of one inlet water is connected to the thermostatic bulb (95) through the intermediary of a bearing spring (98) which determines alone the pressure of this edge against the said shoulder (91) in case of overstroke of the control of the thermostatic bulb (95).

9. Mixer tap according to claim 6, characterized by the fact that the movable plate (71) is driven in rotation through a driving member (72) the portion of which emerging out of the tubular body (60) has a slot (100) in which a sliding block (99) moves within slanted slides.

10. Mixer tap according to claim 9, characterized by the fact that the sliding block (99) comprises a housing (102) in which is located a stud (103) of the control lever (83), hinged on the driving member (72) around an axis (74) perpendicular to the longitudinal axis of the mixer tap, the opposite resting face of the sliding block (94) comprising a wedge (105), the active face of which, in contact with the control rod (96) of the thermostatic bulb (95) is inclined in the opposite direction to the one of the slide for the sliding block (99).

11. Mixer tap according to claim 10, characterized by the fact the position of the wedge (105) with respect to the sliding block (99) is adjustable by means of a screw (106).

FIG. 1

FIG. 2          FIG. 3          FIG. 4

0 156 122

0 156 122

FIG.5

3

FIG. 6

FIG. 7

FIG. 8